# EUROPÄISCHE PATENTSCHRIFT

(11) **EP 0 714 966 B1**
(45) Veröffentlichungstag und Bekanntmachung des Hinweises auf die Patenterteilung: **03.05.2000**
(21) Anmeldenummer: 95203191.2
(22) Anmeldetag: 21.11.1995
(51) Int. Cl.: C09K 11/02, C09K 11/58, C09K 11/57, C09K 11/56, C09K 11/88, H01J 29/20

(54) **Lumineszierender Schirm mit einer Leuchtstoffzusammensetzung**
Luminescent screen with a phosphor composition
Ecran luminescent muni d'une composition de matériaux luminescents

(30) Priorität: 30.11.1994 DE 4442599
(43) Veröffentlichungstag der Anmeldung: 05.06.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Haase, Markus, Dr., c/o Philips, D-22335 Hamburg (DE); Bechtel, Helmut, Dr., c/o Philips, D-22335 Hamburg (DE); Czarnojan, Wolfram, c/o Philips, D-22335 Hamburg (DE); Wädow, Dieter, c/o Philips, D-22335 Hamburg (DE)
(74) Vertreter: Volmer, Georg, Dipl.-Ing.

(56) Entgegenhaltungen:
- FR-A- 1 525 036
- US-A- 3 461 077

## Beschreibung

Die Erfindung betrifft einen lumineszierenden Schirm, insbesondere einen Flachbildschirm, beispielsweise ein Niederenergie-Kathodenstrahl-Display, mit einer Leuchtstoffzusammensetzung aus einem sulfid- oder selenidhaltigen Leuchtstoff mit einer Beschichtung.

Niederenergie-Kathodenstrahl-Displays sind eine neue Entwicklung auf dem Gebiet der Leuchtanzeigevorrichtungen, die durch den Trend zu Flachbildschirmen entstanden ist. Flachbildschirme werden für die drei Marktsegmente Büroautomatisierung, Audio/Video-Technik sowie Navigation und Unterhaltung entwickelt. Im Bürobereich sind vorallem die mobilen Anwendungen zu nennen, angefangen vom Notebook- Computer, Personal Digital Assistant, Faxgerät bis hin zum Mobiltelefon. Im Audio- und Videobereich sollen die Flachbildschirme nicht nur in Camcordern Verwendung finden, sondern auch in Fernsehgeräten und Monitoren. Der dritte Bereich umfaßt Flachbildschirme als Monitore für Navigationssysteme in Autos und Flugzeugen, aber auch die Displays von Spielekonsolen.

Bei Flachbildschirmen ist aus geometrischen und anderen Gründen die maximale Beschleunigungsspannung auf Werte beschränkt, die deutlich unter denen für herkömmliche Kathodenstrahl-Displays liegen. Da andererseits die erreichbare Bildhelligkeit und die Energieeffizienz des Displays mit sinkender Beschleunigungsspannung abnimmt, darf die Beschleunigungsspannung auch nicht zu sehr verringert werden. Niederenergie-Kathodenstrahl-Displays werden deshalb mit Beschleunigungsspannungen im Bereich von etwa 1 bis 10 kV betrieben. Die BeschleunigungsSpannungen sind damit deutlich niedriger als die herkömmlicher Kathodenstrahl-Displays, die mit einer Spannung von typischerweise 25 - 35 kV betrieben werden, sie sind aber andererseits deutlich höher als die Beschleunigungsspannungen von Vakuum-Fluoreszenzanzeigen, die etwa 0,01 bis 0,3 kV betragen.

Es ist üblich, die Leuchtstoffe für Kathodenstrahl-Displays, auch wenn diese herkömmlicher Art sind, einer Oberflächenbehandlung zu unterziehen, damit sie die an sie gestellten Anforderungen besser erfüllen können.

Einmal stellt sich die Anforderung der leichten Dispergierbarkeit an Leuchtstoffzusammensetzungen in Dispersionslösungen für die photolithografischen Fertigungsprozesse für lumineszierende Schirme. Dafür wurden Dispersionsoberflächenbeschichtungen entwickelt, die frei fließende Pulver ergeben, aus denen sich leicht herstellbare und stabile Dispersionen erzeugen lassen.

Ein anderer Aspekt bei der Entwicklung von Beschichtungen ist der Schutz gegen agressive Chemikalien, wie sie z.B. bei der photolithographischen Fertigung von Displays eingesetzt werden. Besonders bei dem üblicherweise verwendeten "flow coating"-Prozeß, bei dem Dichromate eingesetzt werden, werden ungeschützte Leuchtstoffe leicht angegriffen. Gleichzeitig wird auch Dichromat verbraucht und die Viskosität der Dispersionen verändert sich.

Um dem abzuhelfen und um die photosensitiven Eigenschaften und die Stabilität von Leuchtstoffdispersionen, die für photolithographische Prozesse verwendet werden, zu verbessern, wird in der US 3 690 929 vorgeschlagen, diesen Dispersionen wenig lösliche, saure Oxide zuzufügen, wobei diese sauren Oxide die Oxide von wenigstens einem Element sind, das ausgewählt ist aus der Gruppe, die aus Bor, Vanadin, Gallium, Germanium, Arsen, Niob, Molybdän, Antimon, Tantal und Wolfram besteht. Es ist auch möglich, diese Oxide auf dem Leuchtstoff niederzuschlagen. Das Oxid des Germaniums kann dabei durch Zersetzung des Sulfids hergestellt werden.

Weitere Anforderungen an Leuchtstoffe werden in Hinsicht auf die Farbqualität gestellt. Dafür wird bei den sogenannten "pigmentierten" Leuchtstoffen die Dispersionsbeschichtung ersetzt oder auch kombiniert mit einer zweiten Art von Beschichtung, deren wesentlicher Bestandteil Farbpartikel sind. Die Farbpartikel reduzieren die Reflexion des Umgebungslichtes auf den Leuchtstoffkörnern und erhöhen damit den Kontrast des auf dem lumineszierenden Schirm dargestellten Bildes. Eine weitere Funktion dieser Farbpartikel kann es sein, bei Leuchtstoffen, bei denen die Farbwerte außerhalb der Norm liegen, diese an die Norm anzugleichen, indem sie als Farbfilter wirken.

Funktionell wiederum andere Beschichtungen werden bei Leuchtstoffen für Vakuum-Fluoreszenz-Anzeigen verwendet, in denen die Anregung mit niederenergetischen Elektronen von einigen 10 Volt bis maximal einigen 100 Volt erfolgt. Hier gilt es Aufladungseffekte während der Anregung der Leuchtstoffe zu verhindern, die die Effizienz der Anregung beeinträchtigen. Beschichtungen für Leuchtstoffpulver für Vakuum-Fluoreszenz-Anzeigen bestehen deshalb aus leitfähigkeitsverbessernden Materialien wie Indium-Zinnoxid, feine Metallpulver u.ä.

Ganz neue Anforderungen werden jedoch an Leuchtstoffe bei deren Verwendung für Niederenergie-Kathodenstrahl-Displays gestellt.

Um trotz der niedrigen Anregungsspannung eine gute Bildhelligkeit zu erzielen, müssen diese Displays mit hohen Stromstärken betrieben werden. Damit die benötigte Stromstärke nicht unpraktikabel hohe Werte erreicht, müssen gleichzeitig Leuchtstoffe mit hoher Effizienz verwendet werden. Selbst wenn die Architektur des Displays extrem hohe Stromstärken zuläßt, kann die niedrige Effizienz eines Leuchtstoffes nicht beliebig durch Erhöhung der Stromstärke ausgeglichen werden, da die Leuchtintensität des Leuchtstofffes nach zunächst linearem Anstieg mit der Stromstärke schließlich einem Sättigungswert zustrebt. Bei welcher Stromstärke dieser Sättigungswert erreicht wird, hängt von der Art des Leuchtstoffes und dessen Präparationsbedingungen ab.

Für Niederenergie-Kathodenstrahl-Displays ist es deshalb besonders wichtig, daß die eingesetzten Leuchtstoffe eine hohe Effizienz aufweisen und ferner auch, daß sie den besagten Sättigungswert erst bei hohen Stromstärken erreichen. Die Bedingung hoher Effizienz bei ausreichend hohem Sättigungswert erfüllen nur sehr wenige Leuchtstoffe, insbesondere sind es die sulfid- und selenidhaltigen Leuchtstoffe, wie ZnS:Ag, ZnS:Cu, ZnCdS:Ag, ZnS:Mn, aktiviertes Zn(S,Se), aktiviertes Y₂O₂S u.ä.

Unter den Anregungsbedingungen in Niederenergie-Kathodenstrahl-Displays werden allerdings gerade diese sulfid- und selenidhaltigen Leuchtstoffe sehr schnell degradiert, d.h. der Beschuß mit niederenergetischen Elektronen führt zu einer beschleunigten Abnahme der Leuchtintensität bzw. Effizienz des Leuchtstoffes. Dabei bewirkt die geringe Eindringtiefe der niederenergetischen Elektronen vermutlich, daß die strahlungsinduzierten Reaktionen in den Randschichten der Leuchtstoffkörner konzentriert sind und dort verstärkt auftreten.

Man beobachtet jedenfalls bei konventionell beschichteten Displays, die durch eine Niederenergie-Kathodenstrahlröhre angeregt werden, eine rasche Abnahme der Helligkeit. Bei farbigen Displays führt dies zusätzlich zu einer langsamen Verschiebung der Farbwerte aller Mischfarben, wenn nicht jeder der drei üblicherweise eingesetzten Leuchtstoffe gleich schnell degradiert.

Andererseits sollen aber kommerzielle Niederenergie-Kathodenstrahl-Displays, beispielsweise Farbfernseher mit flachem Bildschirm, mehrere tausend Betriebstunden ein gleichbleibend helles Bild mit unverfälschten Farbwerten liefern.

Es ist daher Aufgabe der vorliegenden Erfindung, einen lumineszierenden Schirm mit einer Leuchtstoffzusammensetzung aus einem sulfid- und/oder selenidhaltigen Leuchtstoff und einer Beschichtung zu schaffen, die bei einer Anregung mit Elektronen von etwa 1 bis 10 kV nicht degradiert.

Erfindungsgemäß wird die Aufgabe gelöst durch einen lumineszierenden Schirm mit einer Leuchtstoffzusammensetzung aus einem sulfidhaltigen (bzw. selenidhaltigen) Leuchtstoff mit einer Beschichtung, die Germaniumdisulfid (bzw. Germaniumdisulfid/Germaniumdiselenid) enthält.

Für solche lumineszierenden Schirme können die Vorteile der "effizienten" sulfidhaltigen Leuchtstoffe genutzt werden und die Schirme bleiben lange Zeit hell und kontrastreich.

Eine Beschichtung, die Germaniumdisulfid oder Germaniumdisulfid/Germaniumdiselenid enthält, wirkt überraschenderweise als stabilisierender Schutzüberzug, der die durch niederenergetische Strahlung induzierten Korrosionsvorgänge in sulfid- und/oder selenidhaltigen Leuchtstoffen begrenzt.

Germaniumdisulfid ist farblos, es reagiert nicht mit den sulfidischen oder selenidhaltigen Substraten und wird selber durch Strahlung nicht degradiert. Da es farblos ist, beeinflusst es auch nicht die Farbwerte der Leuchtstoffe. Es ist hydrophil, sodaß sich die beschichteten Partikel auch leicht dispergieren lassen. Germaniumdiselenid hat im wesentlichen die gleichen Eigenschaften wie Germaniumdisulfid. Es ist jedoch nicht farblos und wirkt je nach Selenidanteil als Filter für grüne und blaue Strahlung.

Eine bevorzugte Ausführung der Erfindung ist dadurch gekennzeichnet, daß die Beschichtung zusätzlich Germaniumdioxid enthält. Ein Anteil an dem glasig-amorphen Germaniumdioxid verfestigt die Germaniumdisulfid- oder Germaniumdiselenid-Beschichtung.

Es kann bevorzugt sein, daß der Leuchtstoff aus aktiviertem Zinksulfid, Cadmiumsulfid oder Zink-Cadmiumsulfidmischkristallen und die Beschichtung aus Germaniumdisulfid und gegebenenfalls Germaniumdioxid besteht.

Es kann weiterhin bevorzugt sein, daß der Leuchtstoff aus aktivierten Mischkristallen aus Zinksulfidselenid ZnS₁₋ₓSeₓ oder Cadmiumsulfidselenid CdS₁₋ₓSeₓ mit 0 < x < 0,2 und die Beschichtung aus einem Gemisch aus Germaniumdisulfid und Germaniumdiselenid im Verhältnis 1-x/x und gegebenenfalls Germaniumdioxid besteht.

Im Rahmen der vorliegenden Erfindung kann es auch bevorzugt sein, daß der erfindungsgemäß beschichtete Leuchtstoff eine Deckschicht aus einem Pulverhilfsmittel aufweist.

Ansich ist die erfindungsgemäße Beschichtung abriebfest, sodaß der beschichtete Leuchtstoff als solcher transportiert und verwendet werden kann. Es ist jedoch üblich, daß Leuchtstoffpulver eine Deckschicht aus einem Pulverhilfsmittel erhalten, das die Handhabung des Pulvers erleichtert. Da es sich gezeigt hat, daß Pulverhilfsmittel, die oberflächlich gebundene Hydroxylgruppen enthalten, wie z.B. SiO₂, die Alterung der noch Leuchtstoffe verstärken, ist es besonders vorteilhaft, einen sulfid- und/oder selenidhaltigen Leuchtstoff, der eine Deckschicht aus einem Pulverhilfsmittel wie SiO₂ aufweist, durch eine stabilisierende Zwischenschicht aus Germaniumdisulfid und/oder Germaniumdiselenid zu schützen.

Aus dem gleichen Grund ist die Kombination aus einem sulfid- und/oder selenidhaltigem Leuchtstoff mit einer stabilisierenden Beschichtung aus Germaniumdisulfid und/oder Germaniumdiselenid mit einer Deckschicht, die Pigmente, insbesondere solche mit oberflächlich gebundenen Hydroxylgruppen, enthält, besonders bevorzugt.

Zur Herstellung einer Beschichtung für einen sulfidhaltigen (bzw. sulfid selenidhaltigen) Leuchtstoff, die im wesentlichen aus Germaniumdisulfid (bzw. Germaniumdisulfid/Germaniumdiselenid) besteht, wird in einem ersten Schritt eine Lösung einer Germaniumverbindung in einem Säure/Wasser-Gemisch mit einer Konzentration der Säure 4 ≤ n ≤ 8 hergestellt und in einem zweiten Schritt durch Reaktion der germaniumhaltigen Lösung mit dem sulfidhaltigen (bzw. selenidhaltigen) Leuchtstoff Germaniumdisulfid (bzw. Germaniumdisulfid/Germaniumdiselenid) auf dem Leuchtstoff niedergeschlagen.

Nachstehend wird die Erfindung weiter erläutert und es werden Ausführungsbeispiele aufgeführt.

Die sulfid- und selenidhaltigen Leuchtstoffe, die gemäß der Erfindung mit einer stabilisierenden Beschichtung versehen werden, sind in erster Linie die sulfidhaltigen Zinkleuchtstoffe, wie ZnS:Ag, ZnS:Cu, ZnS:Mn u.ä. Weiterhin können erfindungsgemäß auch Leuchtstoffe auf der Basis von Cadmiumsulfid und Zinkcadmiumsulfid stabilisiert werden. Die Lebensdauer von Oxisulfid-Leuchtstoffen, beispielsweise auf der Basis von Y₂O₂S, konnte ebenfalls verbessert werden. Weiterhin lassen sich Leuchtstoffe auf der Basis von ZnS₁₋ₓSeₓ oder CdS₁₋ₓSeₓ mit 0 < x ≤ 0,2 sehr gut durch das erfindungsgemäße Verfahren mit Germaniumsulfid/Germaniumselenid stabilisieren.

Diese Leuchtstoffsubstrate können als Primärpartikel oder als mit Pigment und Bindemittel gemischte Granulate vorliegen. Die Korngröße der Leuchtstoffpartikel ist nicht kritisch. Die Primärkorngröße handelsüblicher Leuchtstoffe liegt bei etwa 2 bis 20 µm.

Diese Substratpartikel werden mit einer dünnen und gleichmäßigen Schicht aus Germaniumdisulfid und/oder Germaniumdiselenid überzogen. Die Schichtdicke ist so dünn, daß die Elektronen die Schicht ohne wesentliche Energieverluste durchdringen können. Sie beträgt üblicherweise 0,001 bis 0,2µm.

Die Beschichtung kann zusätzlich organische oder anorganische Bindemittel wie Latex, Methylcellulose oder Aluminiumphosphat und SiO₂ enthalten, um die Dichtigkeit der Beschichtung noch zu verbessern und die Möglichkeit von chemischen Angriffen auf das Substrat einzuschränken.

Als Ausgangsverbindungen für die Beschichtung werden Germanium(IV)-verbindungen eingesetzt. Bevorzugt ist die Verwendung von Germaniumdioxid und Germaniumtetrachlorid.

Zur Herstellung der Beschichtungslösung werden diese Germaniumverbindungen einzeln oder gemeinsam in verdünnter Salzsäure oder verdünnter Schwefelsäure gelöst. Die Konzentration der Germaniumverbindungen in der sauren, wässrigen Lösung kann 0,5 bis 20 Gewichtsprozent betragen.

Die Wasserstoffionenkonzentration muß zwischen 4-molar und 8-molar liegen. Besonders gute Abscheidung wird bei einer etwa 6-molaren Wasserstoffionenkonzentration erhalten.

In dieser Lösung wird der zu beschichtende Leuchtstoff dispergiert. Durch die Reaktion mit den in der sauren Lösung oberflächlich freigesetzen Sulfid- bzw. Selenidionen des sulfidhaltigen oder sulfid selenidhaltigen Leuchtstoffes wird Germaniumdisulfid oder Germaniumdisulfid/Germaniumdiselenid in einer Oberflächenreaktion auf den Leuchtstoffpartikeln abgeschieden. Der Leuchtstoff erhält somit eine kompakte Deckschicht aus Germaniumdisulfid (bzw. Germaniumdisulfid/Germaniumdiselenid).

Diese Suspension wird noch 10 min bis 2h weiter gerührt, um die frischgefällten Niederschläge irreversibel zu altern.

Danach wird der beschichtete Leuchtstoff von der über-schüssigen Beschichtungslösung abgetrennt, mit einer Waschflüssigkeit, z.B. Alkohol, gewaschen und getrocknet.

Anschließend kann er einer oxidierenden Nachbehandlung unterworfen werden, durch die die Germaniumdisulfid- oder Germaniumdisulfid/Germaniumdiselenid-Niederschläge teilweise in das Germaniumdioxid umgewandelt werden.

Dazu wird die wie beschrieben vorbehandelte Leuchtstoffzu-sammensetzung in einer sauerstoffhaltigen Atmosphäre bei 315°C bis 500°C für 10 min bis 2h behandelt.

Durch die oxidative Behandlung wird eine mechanisch und chemisch sehr beständige Beschichtung aus Germaniumdisulfid oder Germaniumdisulfid/Germaniumdiselenid mit glasigamorphem Germaniumdioxid erhalten. Die Beschichtung haftet fest an dem Substrat.

Der eigentlichen Beschichtung kann auch noch ein Nachverdichtungsschritt folgen, bei dem das beschichtete Leuchtstoffpulver auf 200°C für 10 bis 60 min gehalten wird.

Die so hergestellte Beschichtung hat eine Schichtdicke von ca. 10 nm. Durch ESCA-Messungen läßt sich feststellen, daß die Beschichtung die Leuchtstoffsubstrate vollkommen abdeckt, obwohl es für die Erfindung nicht wesentlich ist, daß die Beschichtung die Substratpartikel absolut dicht umschließt.

Die Beschichtung ist hydrophil und ist gut kompatibel mit den üblichen Beschichtungen, sodaß sie als Grundschicht für weitere Beschichtungen geeignet ist, die anschließend noch aufgebracht werden können, um die Pulvereigenschaften oder die Farbwerte des Werkstoffes zu verbessern.

Germaniumdisulfid und -oxid zeigen keine konkurierende Absoption. Sie sind farblos und verändern die Farbwerte des Leuchtstoffes nicht.

Die Beschichtung selber zeigt keinerlei Degradation. Insgesamt wird die Lebensdauer des Werkstoffes durch die Beschichtung, wie sich durch ALT-Tests zeigen läßt, um den Faktor 5-10 gesteigert.

Besonders vorteilhaft ist es, wenn die Beschichtung zusätzlich SiO₂ enthält. Diese SiO₂-Beschichtung kann im Gemisch mit der germaniumhaltigen Beschichtung vorliegen oder sie kann getrennt als Deckschicht aufgebracht werden.

Zur Kontrastverbesserung des auf dem Display dargestellten Bildes kann es vorteilhaft sein, wenn das Leuchtstoffpulver zusätzlich ein Pigment enthält. Das Pigment wird dem Leuchtstoff im Gewichtsverhältnis 0,5:100 bis 3:100 zugemischt.

### Ausführungsbeispiel 1

114 ml Germaniumtetrachlorid werden in einer Mischung aus 5000 ml destilliertem Wasser und 5000 ml 37,5iger Salzsäure gelöst. Zu dieser Lösung werden 500 g ZnS:Ag-Leuchtstoff gegeben und 20 min gerührt. Anschließend wird der beschichtete Leuchtstoff abfiltriert und und bei 120°C getrocknet.

### Ausführungsbeispiel 2

104 g Germaniumdioxid werden in 1500 ml Wasser suspendiert, mit 1000 ml 1-molarer Natronlauge versetzt und 5 min gerührt. Anschließend werden zunächst 2000 ml 37%ige Salzsäure und danach abwechselnd portionsweise insgesamt 10000 ml Wasser und 8000 ml 37%ige Salzsäure zugegeben. Zu dieser Lösung werden 5000 g ZnS:Cu gegeben und 20 min gerührt. Anschließend wird der so beschichtete Leuchtstoff abfiltriert und bei 120°C getrocknet.

Die Oxidation der Beschichtung wird durch Erhitzen des trockenen sulfidbeschichteten Leuchtstoffzusammensetzung auf eine Endtemperatur von 420 °C mit einer Aufheizgeschwindigkeit von 4°C / min bewirkt.

### Ausführungsbeispiel 3

114 ml Germaniumtetrachlorid werden in einer Mischung aus 5000 ml destilliertem Wasser und 5000 ml 37,5iger Salzsäure gelöst. Zu dieser Lösung werden 500 g rotleuchtender ZnCdS:Ag-Leuchtstoff gegeben und 20 min gerührt. Anschließend wird der beschichtete Leuchtstoff abfiltriert und und bei 120°C getrocknet.

### Ausführungsbeispiel 4

20,8 g Germaniumdioxid werden in 300 ml Wasser suspendiert, mit 200 ml 1-molarer Natronlauge versetzt und 5 min gerührt. Anschließend werden zunächst 400 ml 37%ige Salzsäure und danach portionsweise insgesamt 2000 ml Wasser und 1600 ml 37%iger Salzsäure zugegeben. Zu dieser Lösung werden 1000 g Y₂O₂S:Eu gegeben und 20 ml gerührt. Anschließend wird der so beschichtete Leuchtstoff abfiltriert und bei 120°C getrocknet.

Die Oxidation der Beschichtung wird durch Erhitzen der trockenen sulfidbeschichteten Leuchtstoffzusammensetzung auf eine Endtemperatur von 440°C mit einer Aufheizgeschwindigkeit von 4°C/min bewirkt.

### Ausführungsbeispiel 5

1000 g beschichteter Leuchtstoff nach Ausführungsbeispiel 1 bis 4 werden in 7,5 Liter eines 1:1- Gemisches aus Wasser und Aceton eingerührt und die Suspension mit 20 ml einer kolloidalen Kieselsäurelösung (Ludox® AS-40, Du Pont, 40% in Wasser, berechn. als SiO₂) versetzt. Der pH-Wert der Lösung soll bei 6 liegen und wird nötigenfalls mit Schwefelsäure nachgestellt. Anschließend wird die Suspension 12 Stunden gerührt.

Die Suspension wird danach gefiltert, der Leuchtstoff mit einem 1:1-Gemisch aus Wasser und Aceton gewaschen und anschließend getrocknet.

### Ausführungsbeispiel 6

Die Leuchtstoffzusammensetzung nach Ausführungsbeispiel 1 bis 5 werden zur Herstellung eines Flachbildschirmes für eine Farbbildröhre verwendet.

Dazu wird auf die Innenseite des Schirmes eine dünne lichtempfindliche Schicht, die bei Belichtung klebrig wird, aufgebracht und getrocknet. Dann wird diese Schicht durch eine Lochmaske belichtet und die belichteten klebrigen kreisförmigen Bildelemente werden mit einer Leuchtstoffzusammensetzung nach Ausführungsbeispiel 1 getont.

In einer zweiten und dritten Belichtung werden jeweils andere Bereiche der lichtempfindlichen Schicht mit den Leuchtstoffzusammensetzungen nach Ausführungsbeispiel 2 und 3 getont. Anschließend wird die lichtempfindliche Schicht durch Ausheizen bei Temperaturen > 400°C entfernt.

In gleicher Art und Weise wird als Standard ein Leuchtschirm mit drei Leuchtstoffzusammensetzungen in den Farben rot, blau und grün, die keine stabilisierende Beschichtung haben, beschichtet.

Diese Leuchtschirme werden einem beschleunigten Lebendauertest (ALT) bezüglich Bildhelligkeit und Farbwertwiedergabe in Relation zur eingestrahlten Strahlungsenergiemenge einer Strahlung von 4 kV unterzogen.

Während die Effizienz I/I₀ des Standards anfangs stark abfällt und schließlich auf einem Niveau von 20% des Ausgangswertes konstant bleibt, fällt die Bildhelligkeit des Bildschirmes mit den Leuchtstoffen nach der Erfindung nur wenig ab und bleibt bei etwa 80% des Ausgangswertes konstant.

## Patentansprüche

1. Lumineszierender Schirm mit einer Leuchtstoffzusammensetzung aus einem sulfildhaltigem Leuchtstoff mit einer Beschichtung, die Germaniumdisulfid enthält, oder aus einem sulfidselenidhaltigem Leuchtstoff mit einer Beschichtung, die Germaniumdisulfid/Germaniumdiselenid enthält.

2. Lumineszierender Schirm mit einer Leuchtstoffzusammensetzung nach Anspruch 1, dadurch gekennzeichnet, daß
die Beschichtung zusätzlich bis zu 80 Gew.-% Germaniumdioxid enthält.

3. Lumineszierender Schirm mit einer Leuchtstoffzusammensetzung nach Anspruch 1 und 2, dadurch gekennzeichnet, daß
der Leuchtstoff aus aktiviertem Zinksulfid, Cadmiumsulfid oder Zink-Cadmiumsulfidmischkristallen und die Beschichtung aus Germaniumdisulfid und gegebenenfalls Germaniumdioxid besteht.

4. Lumineszierender Schirm mit einer Leuchtstoffzusammensetzung nach Anspruch 1 und 2, dadurch gekennzeichnet, daß der Leuchtstoff aus aktivierten Mischkristallen aus Zinksulfidselenid ZnS₁₋ₓSeₓ oder Cadmiumsulfidselenid CdS₁₋ₓSeₓ mit 0 < x < 0,2 und die Beschichtung aus einem Gemisch aus Germaniumdisulfid und Germaniumdiselenid im Verhältnis 1-x/x und gegebenenfalls Germaniumdioxid besteht.

5. Lumineszierender Schirm mit einer Leuchtstoffzusammensetzung nach Anspruch 1 bis 4, dadurch gekennzeichnet, daß
dem Leuchtstoff ein Pigment zugesetzt wird.

6. Lumineszierender Schirm mit einer Leuchtstoffzusammensetzung nach Anspruch 1 bis 5, dadurch gekennzeichnet, daß
die Leuchtzusammensetzung eine Deckschicht aus einem Pulverhilfsmittel aufweist.

## Claims

1. A luminescent screen comprising a phosphor composition of a sulphide-containing phosphor with a coating containing germanium disulphide or of a sulphide selenide-containing phosphor with a coating which comprises germanium disulphide/germanium diselenide.

2. A luminescent screen comprising a phosphor composition as claimed in Claim 1, characterized in that the coating additionally comprises up to 80 wt.% germanium dioxide.

3. A luminescent screen comprising a phosphor composition as claimed in Claims 1 and 2, characterized in that the phosphor is composed of activated zinc sulphide, cadmium sulphide or zinc-cadmium-sulphide mixed crystals, and the coating is composed of germanium disulphide and, optionally, germanium dioxide.

4. A luminescent screen comprising a phosphor composition as claimed in Claims 1 and 2, characterized in that the phosphor is composed of activated mixed crystals of zinc sulphide selenide ZnS₁₋ₓSeₓ or cadmium sulphide selenide CdS₁₋ₓSeₓ, wherein 0 < x < 0.2, and the coating is composed of a mixture of germanium disulphide and germanium diselenide, in the ratio of 1-x/x, and, optionally, germanium dioxide.

5. A luminescent screen comprising a phosphor composition as claimed in Claims 1 to 4, characterized in that a pigment is added to the phosphor.

6. A luminescent screen comprising a phosphor composition as claimed in Claims 1 to 5, characterized in that the phosphor composition comprises a covering layer of a powder aid.

## Revendications

1. Ecran luminescent avec une composition luminescente composée d'une matière luminescente contenant du sulfure avec un revêtement qui contient du disulfure de germanium ou d'une matière luminescente contenant du séléniure et du sulfure avec un revêtement qui contient du disulfure/diséléniure de germanium.

2. Ecran luminescent avec une composition de matière luminescente selon la revendication 1, caractérisé en ce que le revêtement contient par ailleurs jusqu'à 80% en poids de dioxyde de germanium.

3. Ecran luminescent avec une composition de matière luminescente selon l'une des revendications 1 et 2, caractérisé en ce que la matière luminescente se compose de sulfure de zinc, de sulfure de cadmium ou de cristaux mixtes de sulfure de zinc/cadmium activés et le revêtement se compose de disulfure de germanium et, éventuellement, de dioxyde de germanium.

4. Ecran luminescent avec une composition de matière luminescente selon l'une des revendications 1 et 2, caractérisé en ce que la matière luminescente se compose de cristaux mixtes activés de sulfure/séléniure de zinc ZnS₁₋ₓSeₓ ou de sulfure/séléniure de cadmium CdS₁₋ₓSeₓ avec 0 < x < 0,2 et le revêtement se compose d'un mélange de disulfure de germanium et diséléniure de germanium dans une proportion de 1-x/x et, éventuellement, de dioxyde de germanium.

5. Ecran luminescent avec une composition de matière luminescente selon l'une des revendications 1 à 4, caractérisé en ce qu'un pigment est ajouté à la matière luminescente.

6. Ecran luminescent avec une composition de matière luminescente selon l'une des revendications 1 à 5, caractérisé en ce que la composition de matière luminescente présente une couche de revêtement composée d'un adjuvant en poudre.
